# EUROPEAN PATENT APPLICATION

(11) **EP 4 556 178 A1**
(43) Date of publication of application: **21.05.2025**
(21) Application number: 23868388.2
(22) Date of filing: 07.08.2023
(51) Int. Cl.: B25J 19/00, B25J 13/08, B25J 5/00, B25J 9/16, B25J 19/02, G05D 1/20

(54) **ROBOT FOR MOVING CENTER OF GRAVITY BY USING MASS UNIT, AND CENTER-OF-GRAVITY MOVING METHOD THEREFOR**

(30) Priority: 23.09.2022 KR 20220120962
(71) Applicant: Samsung Electronics Co., Ltd., Suwon-si, Gyeonggi-do 16677 (KR)
(72) Inventor: LEE, Minhee, Suwon-si Gyeonggi-do 16677 (KR); KANG, Sanghyun, Suwon-si Gyeonggi-do 16677 (KR); KWAK, Hyunsuk, Suwon-si Gyeonggi-do 16677 (KR); KOO, Donghan, Suwon-si Gyeonggi-do 16677 (KR); CHO, Jaemyung, Suwon-si Gyeonggi-do 16677 (KR)
(74) Representative: Gulde & Partner
(86) International application number: PCT/KR2023/011581
(87) International publication number: WO 2024/063328

(57) **Abstract**

A robot is disclosed. The present robot comprises: a center of gravity moving device, which moves a sensor, a driving unit and a mass unit so as to change the center of gravity of the robot; and a processor for identifying the traveling situation of the robot at first time on the basis of data acquired through the sensor, and the traveling situation of the robot at second time after the first time if the robot moves in the traveling direction of the robot from the location of the first time, controlling the center of gravity moving device on the basis of the identified traveling situation such that the mass unit moves, and controlling the driving unit such that the robot moves in the traveling direction in a state in which the mass unit has moved, wherein the traveling situation is determined on the basis of at least one from among the pose of the robot, the traveling state of the robot, and the situation of the robot with respect to the traveling path.

## Description

### [Technical Field]

The disclosure relates to a robot that moves a center of gravity by using a mass unit, and a center of gravity moving method therefor.

### [Background Art]

In general, robots are developed for industrial uses, and are being widely used in several industrial sites. Recently, fields where robots are used have become further extended, and thus robots are being utilized not only in general homes, but also in various stores.

In this case, a robot may perform various functions while moving in the space where the robot is located. For example, a robot may perform a cleaning operation while moving in the space where the robot is located, or perform an operation of carrying an object loaded on the robot to a specific location.

### [Disclosure]

### [Technical Solution]

A robot according to an embodiment of the disclosure includes a sensor, a driver, a center of gravity moving device which changes the center of gravity of the robot by moving a mass unit, and at least one processor. The at least one processor identifies a traveling situation of the robot on a first time point and a traveling situation of the robot at a second time point after the first time point in case the robot moves along the traveling direction of the robot from the location at the first time point based on data obtained through the sensor. The at least one processor controls the center of gravity moving device such that the mass unit is moved based on the identified traveling situation. The at least one processor controls the driver such that the robot moves along the traveling direction while the mass unit has been moved. The traveling situation is determined based on at least one of a posture of the robot, a traveling state of the robot, or a situation of the robot with respect to a traveling path.

Meanwhile, a center of gravity moving method for a robot which includes a sensor and a mass unit, and changes the center of gravity by moving the mass unit according to an embodiment of the disclosure includes the steps of identifying a traveling situation of the robot on a first time point and a traveling situation of the robot at a second time point after the first time point in case the robot moves along the traveling direction of the robot from the location at the first time point based on data obtained through the sensor, and moving the mass unit based on the identified traveling situation, and moving along the traveling direction while the mass unit has been moved, and the traveling situation is determined based on at least one of a posture of the robot, a traveling state of the robot, or a situation of the robot with respect to a traveling path.

Meanwhile, in a non-transitory computer-readable medium storing computer instructions that, when executed by at least one processor of a robot which includes a sensor and a mass unit, and changes the center of gravity by moving the mass unit, causes the robot to perform operations according to an embodiment of the disclosure, the operations include the steps of identifying a traveling situation of the robot on a first time point and a traveling situation of the robot at a second time point after the first time point in case the robot moves along the traveling direction of the robot from the location at the first time point based on data obtained through the sensor, and moving the mass unit based on the identified traveling situation, and moving along the traveling direction while the mass unit has been moved, and the traveling situation is determined based on at least one of a posture of the robot, a traveling state of the robot, or a situation of the robot with respect to a traveling path.

### [DESCRIPTION OF DRAWINGS]

FIG. 1 is a diagram illustrating a robot according to an embodiment of the disclosure;
FIG. 2 is a block diagram illustrating a configuration of a robot according to an embodiment of the disclosure;
FIG. 3A and FIG. 3B are diagrams illustrating a center of gravity moving device according to an embodiment of the disclosure;
FIG. 4 to FIG. 14A and FIG. 14B are diagrams illustrating a method of moving a center of gravity by using a mass unit according to an embodiment of the disclosure;
FIG. 15 is a block diagram illustrating a detailed configuration of a robot according to an embodiment of the disclosure; and
FIG. 16 is a flowchart illustrating a method of moving a center of gravity of a robot according to an embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, and/or alternatives of the embodiments of the disclosure. Meanwhile, with respect to the detailed description of the drawings, similar components may be designated by similar reference numerals.

In case it is determined that in describing the disclosure, detailed explanation of related known functions or components may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

The terms used in the disclosure are used only to explain specific embodiments, and are not intended to limit the scope of the disclosure. Further, singular expressions include plural expressions, unless defined obviously differently in the context.

In the disclosure, expressions such as "have," "may have," "include," and "may include" denote the existence of such characteristics (e.g., elements such as numbers, functions, operations, and components), and do not exclude the existence of additional characteristics.

In the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

The expressions "first," "second," and the like used in the disclosure may describe various elements regardless of any order and/or degree of importance. Further, such expressions are used only to distinguish one element from another element, and are not intended to limit the elements.

The description in the disclosure that one element (e.g., a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

In contrast, the description that one element (e.g., a first element) is "directly coupled" or "directly connected" to another element (e.g., a second element) may be interpreted to mean that still another element (e.g., a third element) does not exist between the one element and the another element.

The expression "configured to" used in the disclosure may be interchangeably used with other expressions such as "suitable for," "having the capacity to," "designed to," "adapted to," "made to," and "capable of," depending on cases. The term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g., an embedded processor) for performing the corresponding operations, or a generic-purpose processor (e.g., a CPU or an application processor) that may perform the corresponding operations by executing one or more software programs stored in a memory device.

In the embodiments of the disclosure, 'a module' or 'a unit' may perform at least one function or operation, and may be implemented as hardware or software, or as a combination of hardware and software. Also, a plurality of 'modules' or 'units' may be integrated into at least one module and implemented as at least one processor, excluding 'a module' or 'a unit' that needs to be implemented as specific hardware.

Various elements and areas in the drawings were illustrated schematically. Accordingly, the technical idea of the disclosure is not limited by the relative sizes or intervals illustrated in the accompanying drawings.

Hereinafter, the embodiments according to the disclosure will be described in detail with reference to the accompanying drawings, such that those having ordinary skill in the art to which the disclosure belongs may easily carry out the embodiments.

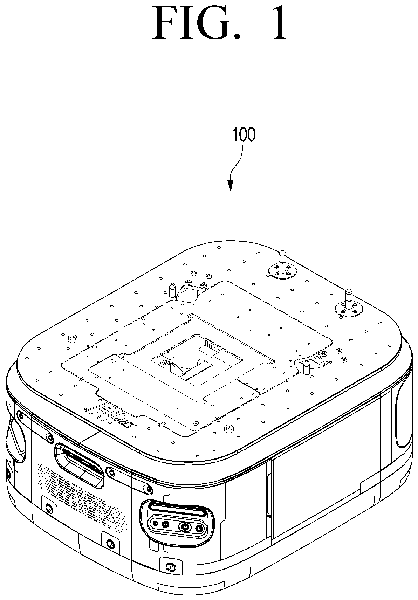

FIG. 1 is a diagram illustrating a robot according to an embodiment of the disclosure.

Referring to FIG. 1, a robot 100 may be implemented as a robot cleaner, a guide robot, or a delivery robot, etc. That is, the robot 100 may perform a cleaning operation while moving in the space where the robot 100 is located. Alternatively, the robot 100 may perform functions of guiding a path to a user in a store, or explaining a product in the store to the user, or moving to follow the user in the store while carrying an object of the user. Alternatively, the robot 100 may perform functions of loading a product on an accommodating space provided in the robot 100, and carrying the loaded product to a specific location.

According to the disclosure, the robot 100 may change the center of gravity of the robot 100 by moving a mass unit installed in the robot 100. Specifically, the robot 100 may move the mass unit, and move on a traveling path while the mass unit has been moved in consideration of the traveling situation of the robot 100. Accordingly, acceleration safety, collision safety, braking performance, overpassing performance, etc. may be increased, and more detailed explanation in this regard will be described below.

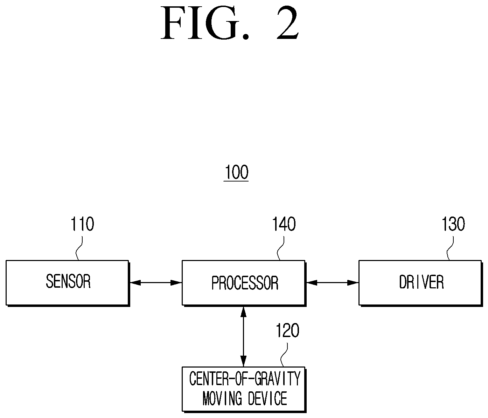

FIG. 2 is a block diagram illustrating a configuration of a robot according to an embodiment of the disclosure.

Referring to FIG. 2, the robot 100 may include a sensor 110, a center of gravity moving device 120, a driver 130, and at least one processor 140.

The sensor 110 may obtain data related to the robot 100 and the surroundings of the robot 100.

For this, the sensor 110 may include an inertial measurement unit (IMU) sensor. The IMU sensor may sense the acceleration and the angular velocity, etc. of the robot 100 by using an accelerometer, a gyroscope, a magnetometer, etc.

Also, the sensor 110 may include a wheel encoder. The wheel encoder may sense the number of rotations and the rotating directions of each of a plurality of wheels installed in the robot 100. Each of the plurality of wheels may be rotated by a motor, and perform a function of moving the robot 100.

In addition, the sensor 110 may include a camera. As an example, the camera may photograph the surroundings of the robot 100 and obtain an image. As another example, the camera may be implemented as a 3D camera, and generate 3D image information around the robot 100. As still another example, the sensor 110 may include two or more cameras. In this case, the two or more cameras may be implemented by a stereo vision method of obtaining images by performing photographing, and generating 3D coordinate information by combining the obtained images.

Also, the sensor 110 may include a LiDAR sensor. The LiDAR sensor may output laser while rotating in 360 degrees. Then, when the laser is reflected from an object around the robot 100 and is received, the LiDAR sensor may detect a distance to the object based on the time when the laser was received.

In addition, the sensor 110 may include a time of flight (ToF) sensor. The ToF sensor may output a light of an infrared wavelength. Then, when the light is reflected from an object around the robot 100 and is received, the ToF sensor may detect a distance to the object based on the time when the light was received.

Further, the sensor 110 may include an ultrasonic sensor. The ultrasonic sensor may output an ultrasonic wave. Then, when the ultrasonic wave is reflected from an object around the robot 100 and is received, the ultrasonic sensor may detect a distance to the object based on the time when the ultrasonic wave was received.

The sensor 110 may be mounted on the processor 140, or provided in the robot 100 separately from the processor 140. Also, the sensor 110 may include an IMU sensor, a wheel encoder, a camera, a LiDAR sensor, a ToF sensor, and an ultrasonic sensor. Further, the sensor 110 may include an IMU sensor, a wheel encoder, and a camera, and include at least one of a LiDAR sensor, a ToF sensor, or an ultrasonic sensor.

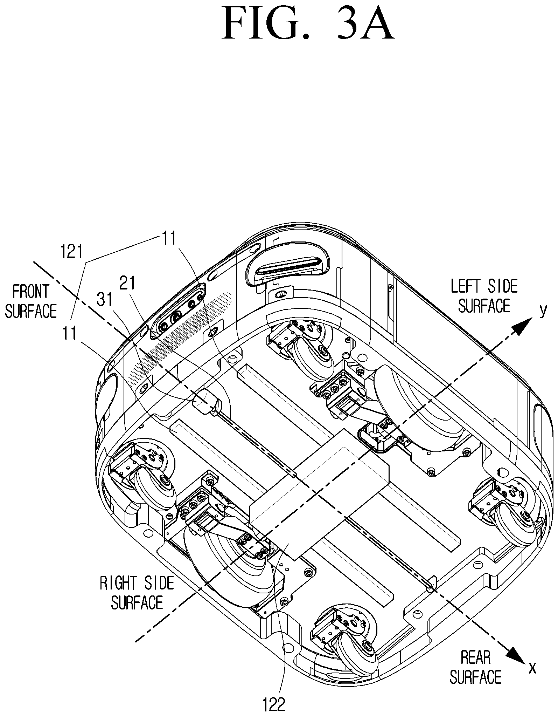

The center of gravity moving device 120 changes the center of gravity of the robot 100 by moving the mass unit. In this case, as in FIG. 3A, the center of gravity moving device 120 may be installed in the lower portion of the robot 100.

Referring to FIG. 3A, the center of gravity moving device 120 may include a mass unit moving device 121 and a mass unit 122.

The mass unit moving device 121 may include a guide rail 11, a guide element 21, and a motor 31.

The guide rail 11 may provide a path where the mass unit 122 may move. That is, the mass unit 122 may be coupled to the guide rail 11 so that it may move on the guide rail 11, and move along the guide rail 11.

As an example, the guide rail 11 may be provided in a shape of a bar which is long in the x axis direction, and the mass unit 122 may be moved in the x axis direction along the guide rail 11. The x axis direction may be a direction toward the front surface and the rear surface of the robot 100. Accordingly, in case the mass unit 122 moves in the x axis direction along the guide rail 11, the mass unit 122 may be located on the front surface side or the rear surface side of the robot 100 based on the center.

The guide element 21 may move the mass unit 122. For this, the guide element 21 may include a lead screw, and may be connected to the mass unit 122 in a screw style. Also, the guide element 21 may be connected to the motor 31 located on one end of the guide element 21. Accordingly, when the motor 31 rotates, the guide element 21 may rotate, and the mass unit 122 may move along the guide rail 11 by the rotation of the guide element 21.

The mass unit 122 may be a mass body having specific mass. Accordingly, when the mass unit 122 moves along the guide rail 11, the center of gravity of the robot 100 may be changed.

For example, in case the mass unit 122 moves to the front surface side of the robot 100, the center of gravity of the robot 100 may be moved to the front surface side of the robot 100. Also, in case the mass unit 122 moves to the rear surface side of the robot 100, the center of gravity of the robot 100 may be moved to the rear surface side of the robot 100.

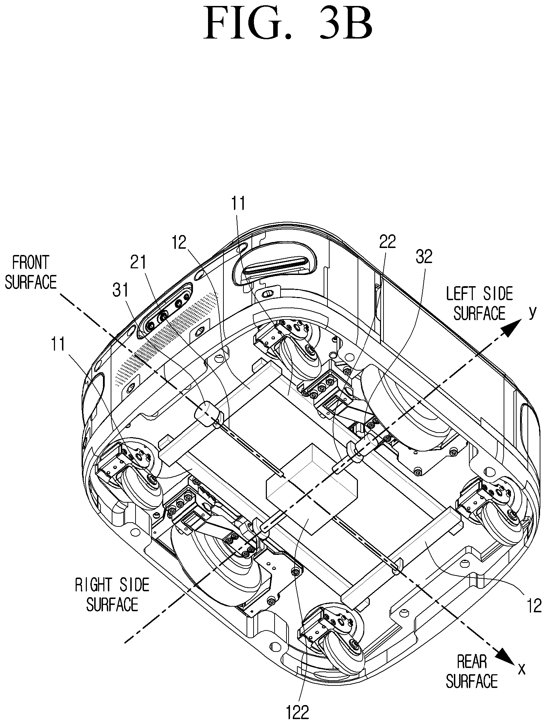

In FIG. 3A, it was explained that the mass unit 122 moves in the x axis direction, but this is merely an example, and the mass unit 122 may be moved in the x axis and the y axis directions. For this, as in FIG. 3B, the mass unit moving device 121 may further include a guide rail 12, a guide element 22, and a motor 32 for moving the mass unit 122 in the y axis direction.

The guide rail 12 may be provided in a shape of a bar which is long in the y axis direction, and the mass unit 122 may be moved in the y axis direction along the guide rail 12. The y axis direction may be a direction toward the right side surface and the left side surface of the robot 100. Accordingly, in case the mass unit 122 moves in the y axis direction along the guide rail 12, the mass unit 122 may be located on the left side or the right side based on the center.

The guide element 22 may move the mass unit 122. For this, the guide element 22 may include a lead screw, and may be connected to the mass unit 122 in a screw style. Also, the guide element 22 may be connected to the motor 32 located on one end of the guide element 22. Accordingly, when the motor 32 rotates, the guide element 22 may rotate, and the mass unit 122 may move along the guide rail 12 by the rotation of the guide element 22. The guide element 21 and the motor 31 may also move along the guide rail 12 together with the mass unit 122. Likewise, when the guide element 21 rotates by the motor 31, the guide element 22 and the motor 32 may also move along the guide rail 11 together with the mass unit 122 by the rotation of the guide element 21.

When the mass unit 122 moves along the guide rail 12, the center of gravity of the robot 100 may be changed. For example, in case the mass unit 122 moves to the left side surface direction of the robot 100, the center of gravity of the robot 100 may be changed to the left side of the robot 100. Also, in case the mass unit 122 moves to the right side surface direction of the robot 100, the center of gravity of the robot 100 may be changed to the right side of the robot 100.

The driver 130 may move the robot 100. For this, the driver 130 may include a plurality of wheels and driving motors for rotating each of the plurality of wheels.

The at least one processor 140 may be electrically connected to the sensor 110, the center of gravity moving device 120, and the driver 130, and control the overall operations and functions of the robot 100.

The at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or a random combination of other components of the robot 100, and perform operations regarding communication or data processing. The at least one processor 140 may execute one or more programs or instructions stored in memory. For example, the at least one processor 140 may perform the method according to an embodiment of the disclosure by executing the one or more instructions stored in the memory.

Meanwhile, in case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 140 may be implemented as a single core processor including one core, or it may be implemented as one or more multicore processors including a plurality of cores (e.g., multicores of the same kind or multicores of different kinds). **In** case the at least one processor 140 is implemented as multicore processors, each of the plurality of cores included in the multicore processors may include internal memory of the processor such as cache memory, on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) where at least one processor and other electronic components are integrated, a single core processor, a multicore processor, or a core included in the single core processor or the multicore processor. Also, the core may be implemented as a CPU, a GPU, an APU, a MIC, a DSP, an NPU, a hardware accelerator, or a machine learning accelerator, etc., but the embodiments of the disclosure are not limited thereto.

Hereinafter, the at least one processor 140 will be described as the processor 140.

The processor 140 may identify a traveling situation of the robot 100 by using information obtained through the sensor 110.

Here, the traveling situation may include a traveling situation of the robot 100 at the first time point and a traveling situation of the robot 100 at the second time point.

In this case, the first time point and the second time point may be time points different from each other. The second time point may be a time point after the first time point. For example, the first time point may be the current time point, and the second time point may be a time point after the present. Accordingly, the traveling situation of the robot 100 at the second time point may be a traveling situation of the robot 100 that will occur in the future after the first time point. For example, at the second time point, the robot 100 may be moving on a point which is distanced from the location at the first time point by a certain distance. Accordingly, the traveling situation of the robot 100 at the second time point may be a traveling situation that may occur in the location at the second time point in case the robot 100 moves along the traveling direction of the robot 100 from the location at the first time point.

That is, the processor 140 may identify the traveling situation of the robot 100 at the first time point and the traveling situation of the robot 100 at the second time point after the first time point in case the robot 100 moves along the traveling direction of the robot 100 from the location at the first time point based on data obtained through the sensor 110.

Here, the traveling situation may be determined based on at least one of a posture of the robot 100, a traveling state of the robot 100, or a situation of the robot 100 with respect to a traveling path.

First, the processor 140 may identify a traveling situation of the robot 100 at the first time point based on data obtained through the sensor 110.

Specifically, the processor 140 may identify at least one of the posture or the traveling state of the robot 100 at the first time point based on the data obtained through the sensor 110 at the first time point, and identify a traveling situation of the robot 100 at the first time point including at least one of the identified posture or traveling state.

For example, the processor 140 may identify a posture of the robot 100 at the first time point by using the acceleration and the angular velocity of the robot 100 that were sensed through the IMU sensor at the first time point.

The posture of the robot 100 may include whether the robot 100 is tilted or is not tilted. Also, the posture of the robot 100 may include a direction in which the robot 100 is tilted in case the robot 100 is tilted. In this case, if it is identified that the robot 100 is not tilted, the processor 140 may identify that the robot 100 is located on a plain (i.e., a bottom surface that is not tilted), and if it is identified that the robot 100 is tilted, the processor 140 may identify that the robot 100 is located on a tilted surface. Also, the processor 140 may identify whether the robot 100 is located on an uphill slope or a downhill slope by using the direction in which the robot 100 is tilted.

In addition, the processor 140 may identify the traveling state of the robot 100 at the first time point by using the number of rotations and the rotating directions of each of the plurality of wheels that were sensed through the wheel encoder at the first time point.

The traveling state of the robot 100 may include whether the robot 100 is halted or is moving. Also, in case the robot 100 is moving, the traveling state of the robot 100 may include the speed of the robot 100, and whether the robot 100 goes forward or backward.

Also, the processor 140 may identify the traveling situation of the robot 100 at the first time point including at least one of the posture or the traveling state of the robot 100 at the first time point.

Specifically, the traveling situation of the robot 100 at the first time point may include whether the robot 100 is in a halt state or is moving at the first time point, whether the bottom surface on which the robot 100 is located at the first time point is a plain or a tilted surface, and in case the robot 100 is moving at the first time point, the speed of the robot 100, and whether the robot 100 goes forward or backward, etc.

Also, the processor 140 may identify the traveling situation of the robot 100 at the second time point based on the data obtained through the sensor 110.

Specifically, the processor 140 may identify at least one of the traveling state of the robot 100 or the situation with respect to the traveling path at the second time point based on the data obtained through the sensor 110 at the first time point, and identify a traveling situation of the robot 100 at the second time point including at least one of the identified traveling state or situation with respect to the traveling path.

The traveling state of the robot 100 at the second time point may include the speed of the robot 100 at the second time point. For this, the processor 140 may identify the speed of the robot 100 at the second time point.

For example, in case a user input for changing the speed of the robot 100 is not received, or an obstacle does not exist on the traveling path of the robot 100, the robot 100 may move at a constant speed. Accordingly, the speed of the robot 100 at the second time point may be identical to the speed of the robot 100 at the first time point. In this case, the processor 140 may identify that the speed of the robot 100 at the first time point is the speed of the robot 100 at the second time point.

As another example, in case a user input for changing the moving speed of the robot 100 is received, the processor 140 may control the driver 130 such that the robot 100 moves at a speed corresponding to the user input. In this case, the processor 140 may identify the speed of the robot 100 at the second time point based on the speed that is changed according to the user input.

As still another example, in case the robot 100 in a halt state starts moving, the processor 140 may gradually increase the speed of the robot 100, and when the speed of the robot 100 reaches a predetermined speed, the processor 140 may control the driver 130 such that the robot 100 maintains the predetermined speed. In this case, the processor 140 may identify the speed of the robot 100 at the second time point by using the acceleration of the robot 100 obtained through the IMU sensor.

As still another example, in case an obstacle exists on the traveling path of the robot 100 based on the data obtained through the sensor 110, the processor 140 may control the driver 130 such that the robot 100 is halted around the obstacle. In this case, the processor 140 may identify the speed of the robot 100 at the second time point by using the distance between the robot 100 and the obstacle and deceleration of the robot 100 obtained through the IMU sensor.

As the robot 100 moves along the traveling direction from the location of the robot 100 at the first time point, the situation with respect to the traveling path of the robot 100 at the second time point may include the traveling environment of the traveling path that exists in the traveling direction based on the location of the robot 100 at the first time point.

For example, the situation with respect to the traveling path of the robot 100 at the second time point may include whether the bottom surface existing in the traveling direction in which the robot 100 will move from the location at the first time point is a plain or a tilted surface, and in case the bottom surface is a tilted surface, whether the robot 100 will move along the tilted surface or move across the tilted surface. Also, the situation with respect to the traveling path of the robot 100 at the second time point may include whether a step exists in the traveling direction in which the robot 100 will move from the location at the first time point, and in case the step exists, the height of the step. The step may include a step between the bottom surfaces, a step that may be generated due to a door sill, etc.

Further, the situation with respect to the traveling path of the robot 100 at the second time point may include the degree of congestion around the traveling path. The degree of congestion may be determined according to the number of objects existing around the traveling path and whether moving objects exist. For example, in case objects of a predetermined number or more exist around the traveling path, or moving objects exist, the processor 140 may identify that the traveling path is congested. Also, in case objects fewer than the predetermined number exist around the traveling path, or moving objects do not exist, the processor 140 may identify that the traveling path is not congested.

In these cases, the processor 140 may identify the situation with respect to the traveling path of the robot 100 at the second time point based on data obtained regarding the traveling direction by using at least one of a 3D sensor, a camera, a LiDAR sensor, a ToF sensor, or an ultrasonic sensor.

For example, the processor 140 may use 3D image information obtained through the camera, or recognize an object in an image obtained through the camera, and obtain information on the type, the shape, the size (e.g., the height), etc. of the object existing on the traveling path. Also, the processor 140 may obtain information on whether an object exists on the traveling path of the robot 100, and the distance between the robot 100 and the object, etc. by using the LiDAR sensor, the ToF sensor, and the ultrasonic sensor. Then, the processor 140 may identify the situation with respect to the traveling path by using the obtained information.

A method of determining a traveling direction in which the robot 100 will move from the location at the first time point is as follows.

For example, a case where the robot 100 is in a halt state at the first time point is assumed. In this case, the processor 140 may identify an obstacle existing around the robot 100 based on the data obtained through the sensor 110, and determine a direction in which the obstacle does not exist around the robot 100 as the traveling direction. Also, in case an obstacle existing around the robot 100 does not exist, the robot 100 may be set to move in the front direction when departing. In this case, the processor 140 may determine the front side of the robot 100 as the traveling direction.

As another example, if it is identified that the robot 100 is moving at the first time point, and an obstacle does not exist in the moving direction of the robot 100 based on the data obtained through the sensor 110, the processor 140 may identify the direction in which the robot 100 is currently moving as the traveling direction. For example, in case an obstacle does not exist on the front side of the robot 100 that is going forward, the processor 140 may identify that the traveling direction from then on is also the front side, and in case an obstacle does not exist on the rear side of the robot 100 that is going backward, the processor 140 may identify that the traveling direction from then on is also the rear side.

The processor 140 may identify the traveling situation of the robot 100 at the second time point including at least one of the traveling state of the robot 100 or the situation with respect to the traveling path at the second time point.

Specifically, the traveling situation of the robot 100 at the second time point may include the speed of the robot 100 at the second time point, whether the robot 100 goes forward or backward, whether the bottom surface of the traveling path of the robot 100 is a plain or a tilted surface, whether the robot 100 will move along the tilted surface or move across the tilted surface according to the direction in which the tilted surface is tilted, whether a step exists on the traveling path, and the degree of congestion of the traveling path, etc.

The processor 140 may control the center of gravity moving device 120 such that the mass unit 122 is moved based on the identified traveling situation, and while the mass unit 122 has been moved, the processor 140 may control the driver 130 such that the robot 100 moves along the traveling direction.

Specifically, if it is identified that the robot 100 which is in a halt state on a plain at the first time point moves on the plain at the second time point based on the identified traveling situation, the processor 140 may move the mass unit 122 to the front surface direction or the rear surface direction of the robot 100 based on whether the robot 100 goes forward or backward at the second time point.

In this case, if it is identified that the robot 100 goes forward on the plain at the second time point, the processor 140 may move the mass unit 122 to a location which is distanced from a reference position by a first distance in the front surface direction, and if it is identified that the robot 100 goes backward on the plain at the second time point, the processor 140 may move the mass unit 122 to a location which is distanced from the reference position by the first distance in the rear surface direction.

The reference position may be the center of a virtual plain corresponding to the lower part of the robot 100 where the mass unit 122 is installed. For example, the reference position may be the center of the guide element 21.

Also, the first distance may be a half of the distance between the center of the guide element 21 and the end portion of the guide element 21.

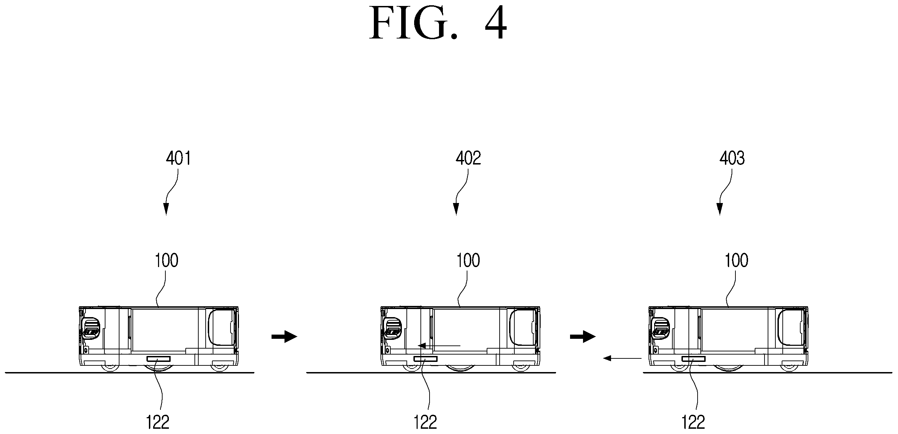

For example, as in 401 in FIG. 4, a case where the robot 100 departs while it is in a halt state on a plain is assumed. In this case, as in 402 in FIG. 4, the processor 140 may move the mass unit 122 to a middle point between the center of the guide element 21 and the end portion located on the front surface side of the robot 100 from among the end portions on both sides of the guide element 21. Then, as in 403 in FIG. 4, after the mass unit 122 has been moved to the front surface side of the robot 100, the processor 140 may control the driver 130 such that the robot 100 goes forward.

That is, in case the robot 100 goes forward when departing, by the accelerating force at the time of departing, force may be applied in the upper direction in the front portion of the robot 100. Before the robot 100 departs, the processor 140 may move the mass unit 122 in the front surface direction of the robot 100, and thereby move the center of gravity of the robot 100 to the front surface side of the robot 100. Accordingly, when the robot 100 goes forward when departing, lifting of the front portion of the robot 100 to the upper side may be prevented, and thus acceleration safety may be increased.

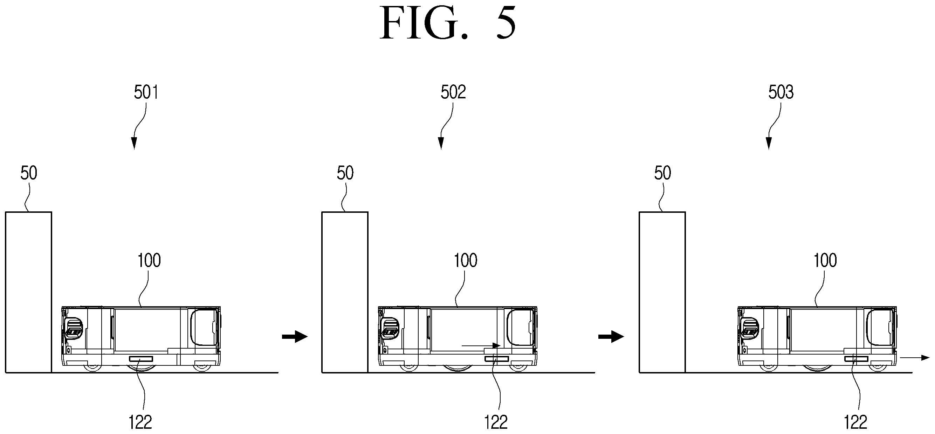

As another example, as in 501 in FIG. 5, a case where the robot 100 departs while it is in a halt state on a plain is assumed. In case an obstacle 50 exists on the front side of the robot 100, the processor 140 may control the driver 130 such that the robot 100 goes backward. In this case, as in 502 in FIG. 5, the processor 140 may move the mass unit 122 to a middle point between the center of the guide element 21 and the end portion located on the rear surface side of the robot 100 from among the end portions on both sides of the guide element 21. Then, as in 503 in FIG. 5, after the mass unit 122 has been moved to the rear surface side of the robot 100, the processor 140 may control the driver 130 such that the robot 100 goes backward.

That is, in case the robot 100 goes backward when departing, by the accelerating force at the time of departing, force may be applied in the upper direction in the rear portion of the robot 100. Accordingly, before the robot 100 departs, the processor 140 may move the mass unit 122 in the rear surface direction of the robot 100, and thereby move the center of gravity of the robot 100 to the rear surface side of the robot 100. Accordingly, when the robot 100 goes backward when departing, lifting of the end portion of the robot 100 to the upper side may be prevented, and thus acceleration safety may be increased.

Also, if it is identified that the robot 100 moving on the plain at a first speed at the first time point moves on the plain at a second speed at the second time point based on the identified traveling situation, the processor 140 may move the mass unit 122 to a location which is distanced from the reference position by a second distance in the front surface direction or the rear surface direction of the robot 100 based on whether the robot 100 goes forward or backward at the second time point and the second speed.

The second distance may be determined based at the second speed. For example, the second distance may be determined to be proportionate to the second speed. That is, as the second speed is faster, the processor 140 may move the mass unit 122 farther from the reference position.

For example, the processor 140 may determine the second distance by which the mass unit 122 is moved from the center of the guide element 21 such that, in case the second speed is faster than or equal to a, the mass unit 122 is located on an end portion of the guide element 21, and in case the second speed is slower than a, the second distance is proportionate to the size of the second speed. The end portion of the guide element 21 may be the end portion located on the front surface side of the robot 100 or the end portion located on the rear surface side of the robot 100.

Further, the second speed may be identical to the first speed. Also, the second speed may be different from the first speed. For example, the second speed may be faster than the first speed. Alternatively, the second speed may be slower than the first speed.

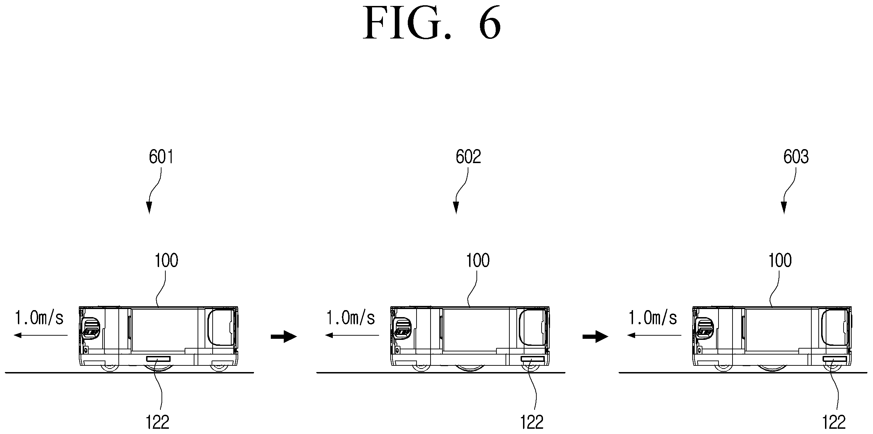

For example, as in 601 in FIG. 6, a case where the robot 100 goes forward on a plain at a speed of 1.0m/s is assumed. In case the speed of the robot 100 is maintained to be constant, as in 602 in FIG. 6, the processor 140 may move the mass unit 122 to the end portion located on the rear surface side of the robot 100 from among the end portions on both sides of the guide element 21. Then, as in 603 in FIG. 6, after the mass unit 122 has been moved to the rear surface side of the robot 100, the processor 140 may control the driver 130 such that the robot 100 goes forward at a speed of 1.0m/s.

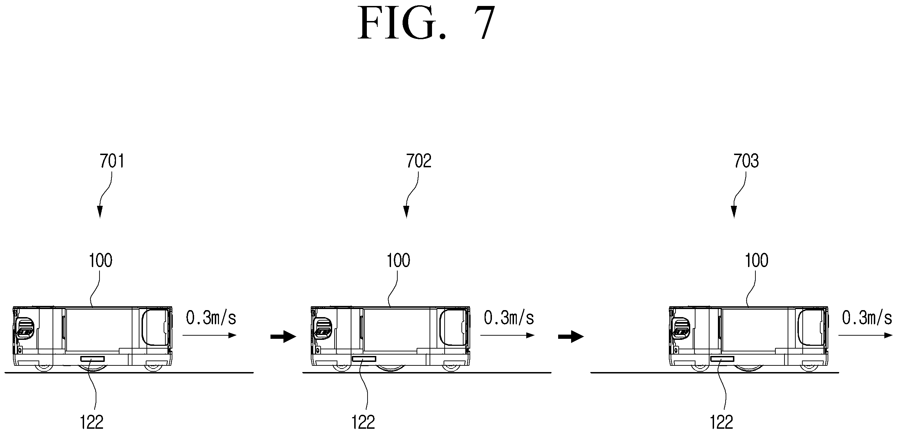

As another example, as in 701 in FIG. 7, a case where the robot 100 goes backward on a plain at a speed of 0.3m/s is assumed. In case the speed of the robot 100 is maintained to be constant, as in 702 in FIG. 7, the processor 140 may move the mass unit 122 to a point that is about 1/3 of the distance between the center of the guide element 21 and the end portion on the front surface side. Then, as in 703 in FIG. 7, after the mass unit 122 has been moved to the front surface side of the robot 100, the processor 140 may control the driver 130 such that the robot 100 goes backward at a speed of 0.3m/s.

That is, in case the robot 100 that is moving collides with an obstacle, the robot 100 may be lifted due to inertia. For example, in case the robot 100 that is going forward collides with an obstacle located on the front side, the rear portion of the robot 100 may be lifted in the upper direction, and in case the robot 100 that is going backward collides with an obstacle located on the rear side, the front portion of the robot 100 may be lifted in the upper direction. Accordingly, by moving the center of gravity of the robot 100 to the rear portion or the front portion of the robot 100 by using the mass unit 122, a phenomenon where the robot 100 is lifted by unexpected collision may be prevented. That is, safety at the time of collision may be increased. As the moving location of the mass unit 122 is determined to be proportionate to the speed of the robot 100, a phenomenon where the robot 100 is lifted may be prevented more effectively.

Also, in the case of moving the mass unit 122 as above, the braking performance of the robot 100 may be increased. That is, in the case of detecting an obstacle in the traveling direction of the robot 100, the processor 140 may control the driver 130 such that the robot 100 is halted. As described above, in the case of moving the center of gravity of the robot 100 to the rear portion or the front portion of the robot 100 according to whether the robot 100 goes forward or backward, the center of gravity may be changed to the opposite side to the direction in which the robot 100 moves. Accordingly, when the robot 100 is halted, the braking performance may be increased. As the moving location of the mass unit 122 is determined to be proportionate to the speed of the robot 100, the braking performance may be further increased.

Also, if it is identified that a step exists on the traveling path where the robot 100 moves at the second time point based on the identified traveling situation, the processor 140 may move the mass unit 122 in the front surface direction or the rear surface direction of the robot 100 based on whether the robot 100 goes forward or backward on the plain at the second time point.

In this case, if it is identified that the robot 100 goes forward at the second time point, the processor 140 may move the mass unit 122 to a location which is distanced from the reference position by a third distance in the rear surface direction, and if it is identified that the robot 100 goes backward on the plain at the second time point, the processor 140 may move the mass unit 122 to a location which is distanced from the reference position by the third distance in the front surface direction.

The third distance may be a distance between the center of the guide element 21 and an end portion of the guide element 21. That is, the processor 140 may move the mass unit 122 to the end portion of the guide element 21 located on the front surface side of the robot 100 or the end portion of the guide element 21 located on the rear surface side of the robot 100.

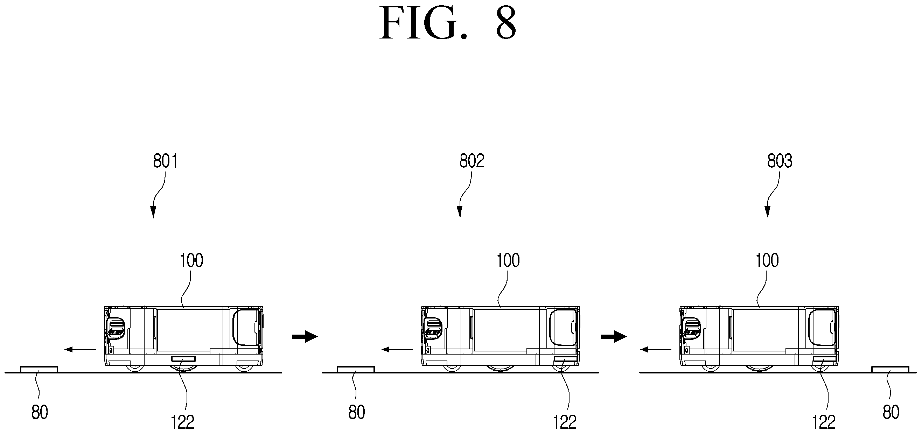

For example, as in 801 in FIG. 8, a case where, while the robot 100 is moving to go forward on a plain, a door sill 80 is detected on the front side of the robot 100 is assumed. In this case, as in 802 in FIG. 8, the processor 140 may move the mass unit 122 to the end portion located on the rear surface side of the robot 100 from among the end portions on both sides of the guide element 21. Then, as in 803 in FIG. 8, while the mass unit 122 has been moved to the rear surface side of the robot 100, the processor 140 may control the driver 130 such that the robot 100 goes forward and passes over the door sill 80.

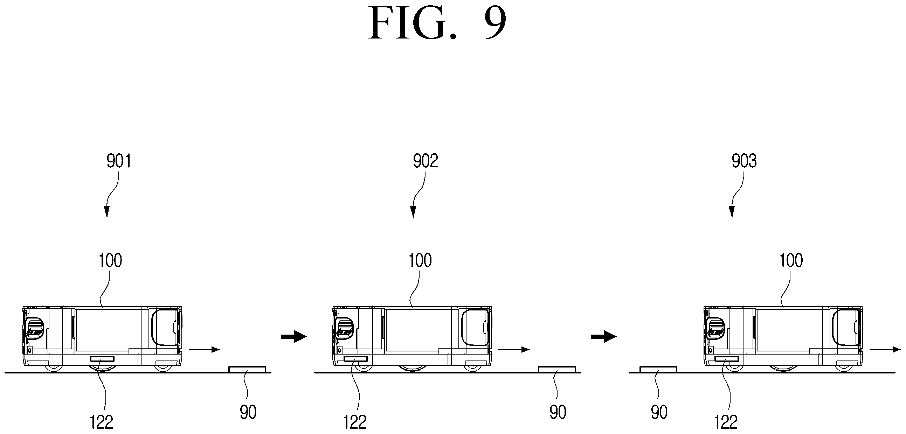

As another example, as in 901 in FIG. 9, a case where, while the robot 100 is moving to go backward on a plain, a door sill 90 is detected on the rear side of the robot 100 is assumed. In this case, as in 902 in FIG. 9, the processor 140 may move the mass unit 122 to the end portion located on the front surface side of the robot 100 from among the end portions on both sides of the guide element 21. Then, as in 903 in FIG. 9, while the mass unit 122 has been moved to the front surface side of the robot 100, the processor 140 may control the driver 130 such that the robot 100 goes backward and passes over the door sill 90.

As described above, before the robot 100 crosses the step, the center of gravity of the robot 100 is moved to the opposite side to the moving direction of the robot 100, and thus the overpassing performance of the robot 100 may be increased.

In case a step exists on the traveling path of the robot 100, the processor 140 may determine the speed of the robot 100 at the second time point. That is, the processor 140 may determine the speed when the robot 100 crosses the step.

Specifically, the processor 140 may determine the speed of the robot 100 at the second time point based on at least one of the height of the step, the speed of the robot 100 at the first time point, or the degree of congestion on the traveling path. Then, the processor 140 may control the driver 130 such that the robot 100 moves along the traveling direction at the determined speed while the mass unit 122 has been moved.

First, in case the height of the step is shorter than or equal to a first height, the processor 140 may control the driver 130 such that the robot 100 moves along the traveling direction at the speed of the robot 100 at the first time point. As an example, the first height may be 7mm. However, this is merely an example, and the first height may be various values. That is, even if the robot 100 does not move fast, it may pass over a low step just with the basic setting in the design specification, and thus the processor 140 may control the driver 130 such that the robot 100 maintains the current speed.

If it is identified that the height of the step is higher than the first height and shorter than or equal to the second height, and the speed of the robot 100 at the first time point is slower than or equal to a predetermined speed, and the traveling path is not congested, the processor 140 may control the driver 130 such that the robot 100 moves along the traveling direction at a speed faster than the predetermined speed.

As an example, the predetermined speed may be 0.5m/s. However, this is merely an example, and the predetermined speed may be various values.

As described above, the feature that a traveling path is not congested means that there are few objects around the traveling path, or moving objects do not exist, and thus a big problem in terms of safety may not occur even if the robot 100 moves at a fast speed. Accordingly, in case the traveling path is not congested, the processor 140 may increase the speed of the robot 100, and may thereby enable the robot 100 to cross a step more easily by inertia. Accordingly, the overpassing performance may be increased.

Meanwhile, if it is identified that the height of the step is higher than the first height and shorter than or equal to the second height, and the speed of the robot 100 at the first time point is slower than or equal to the predetermined speed, and the traveling path is congested, the processor 140 may control the driver 130 to increase the driving force of a motor rotating the plurality of wheels of the robot 100 on a time point when the robot 100 crosses the step on the traveling path.

Here, as an example, the predetermined speed may be 0.5m/s. However, this is merely an example, and the predetermined speed may be various values. Also, as an example, the first height may be 7mm, and the second height may be 12mm. However, this is merely an example, and the first height and the second height may be various values.

As described above, the feature that a traveling path is congested means that there are many objects around the traveling path, or moving objects exist, and therefore, in case the robot 100 moves at a fast speed, an unexpected problem in terms of safety may occur. Accordingly, in case the traveling path is congested, the processor 140 may increase the driving force of the motor when the robot 100 crosses a step, and may thereby enable the robot 100 to pass over the step more easily by the driving force that was instantaneously increased. Accordingly, not only the overpassing performance of the robot 100 may be increased, but also an effect in terms of safety may be achieved.

For this, the processor 140 may identify a time point when the robot 100 crosses a step by using the sensor 110.

For example, when the robot 100 crosses a step, the robot 100 gets to collide with the step, and the robot 100 may be tilted on that moment. Accordingly, the processor 140 may identify whether the robot 100 is tilted by using the IMU sensor, and increase the driving force of the motor on the time point when the robot 100 was detected to be tilted. In this case, if it is identified that a step exists on the traveling path, the processor 140 may increase the sensitivity of the IMU sensor. In this case, a time point when the robot 100 is tilted may be detected more precisely.

As another example, the processor 140 may predict a time point when the robot 100 collides with a step by using the speed of the robot 100 and the distance between the robot 100 and the step, and increase the driving force of the motor on the predicted time point.

In case the height of the step is higher than the first height and shorter than or equal to the second height, and the speed of the robot 100 at the first time point is faster than the predetermined speed, the processor 140 may control the driver 130 such that the robot 100 moves along the traveling direction at the first speed.

As an example, the predetermined speed may be 0.5m/s. However, this is merely an example, and the predetermined speed may be various values. Also, as an example, the first height may be 7mm, and the second height may be 12mm. However, this is merely an example, and the first height and the second height may be various values. That is, even if the height of the step is not so low, in case the speed of the robot 100 is fast to a certain degree, the robot 100 may crosses the step by inertia by the speed, and thus the processor 140 may control the driver 130 such that the robot 100 maintains the current speed.

In case the height of the step is higher than the second height, the processor 140 may control the driver 130 such that the robot 100 is halted.

As an example, the second height may be 12mm. However, this is merely an example, and the second height may be various values. That is, in case the height of the step is high, the robot 100 cannot cross the step, and thus the processor 140 may control the driver 130 such that the robot 100 is halted. Accordingly, safety may be secured.

Also, if it is identified that the robot 100 located on a plain at the first time point will move on a tilted surface at the second time point based on the identified traveling situation, the processor 140 may move the mass unit 122 to the front surface direction or the rear surface direction of the robot 100 based on whether the robot 100 goes forward or backward at the second time point and the direction in which the tilted surface is tilted.

The direction in which the tilted surface is tilted may mean whether the tilted surface is an uphill slope or a downhill slope.

In this case, if it is identified that the robot 100 goes forward on an uphill slope at the second time point, the processor 140 may move the mass unit 122 to a location which is distanced from the reference position by a fourth distance in the front surface direction, and if it is identified that the robot 100 goes forward on a downhill slope at the second time point, the processor 140 may move the mass unit 122 to a location which is distanced from the reference position by the fourth distance in the rear surface direction.

Also, if it is identified that the robot 100 goes backward on an uphill slope at the second time point, the processor 140 may move the mass unit 122 to a location which is distanced from the reference position by the fourth distance in the rear surface direction, and if it is identified that the robot 100 goes backward on a downhill slope at the second time point, the processor 140 may move the mass unit 122 to a location which is distanced from the reference position by the fourth distance in the front surface direction.

In these cases, the fourth distance may be a distance between the center of the guide element 21 and an end portion of the guide element 21. That is, the processor 140 may move the mass unit 122 to the end portion of the guide element 21 located on the front surface side of the robot 100 or the end portion of the guide element 21 located on the rear surface side of the robot 100.

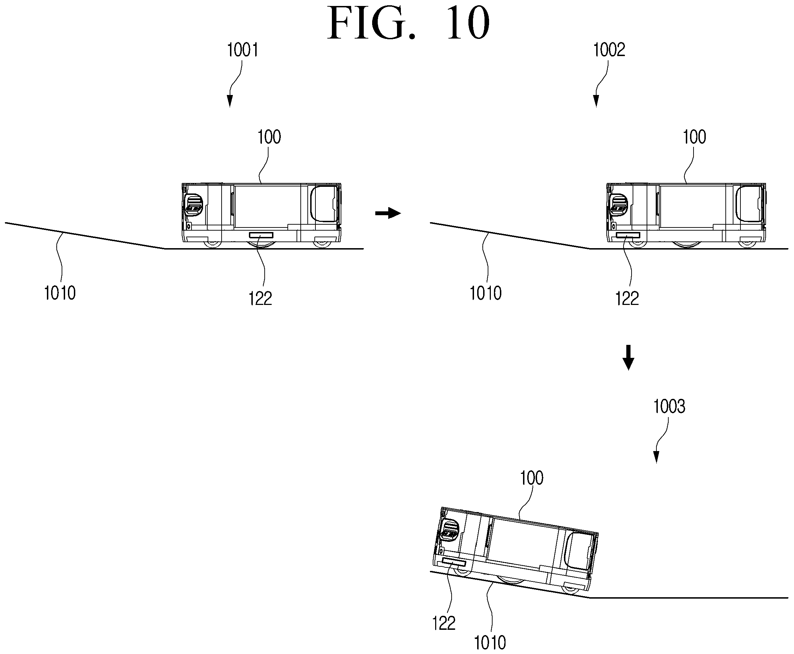

For example, as in 1001 in FIG. 10, a case where, while the robot 100 is moving to go forward on a plain, or the robot 100 is halted on a plain, an uphill slope 1010 is detected on the front side of the robot 100 is assumed. In this case, as in 1002 in FIG. 10, the processor 140 may move the mass unit 122 to the end portion located on the front surface side of the robot 100 from among the end portions on both sides of the guide element 21. Then, as in 1003 in FIG. 10, while the mass unit 122 has been moved to the front surface side of the robot 100, the processor 140 may control the driver 130 such that the robot 100 goes forward and moves along the uphill slope.

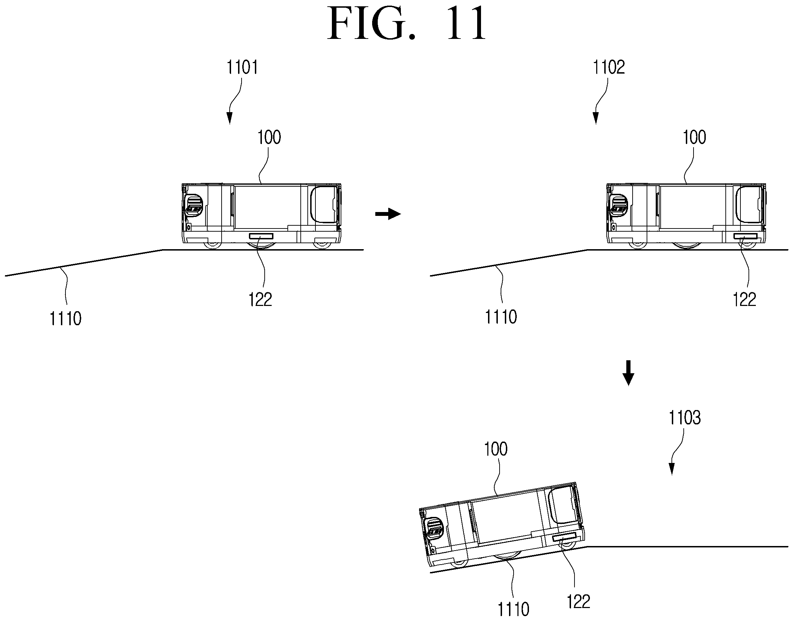

As another example, as in 1101 in FIG. 11, a case where, while the robot 100 is moving to go forward on a plain, or the robot 100 is halted on a plain, a downhill slope 1110 is detected on the front side of the robot 100 is assumed. In this case, as in 1102 in FIG. 11, the processor 140 may move the mass unit 122 to the end portion located on the rear surface side of the robot 100 from among the end portions on both sides of the guide element 21. Then, as in 1103 in FIG. 11, while the mass unit 122 has been moved to the rear surface side of the robot 100, the processor 140 may control the driver 130 such that the robot 100 goes forward and moves along the downhill slope.

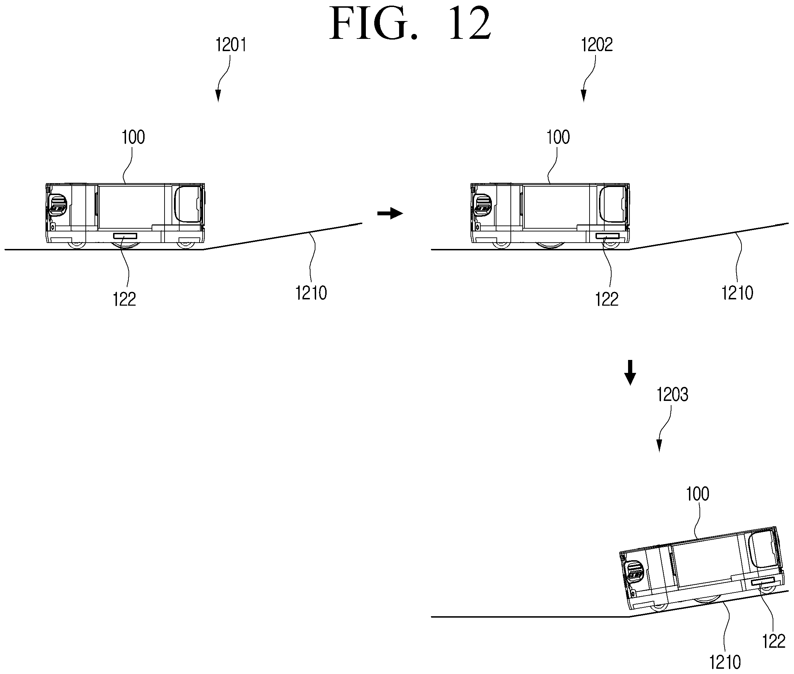

As still another example, as in 1201 in FIG. 12, a case where, while the robot 100 is moving to go backward on a plain, or the robot 100 is halted on a plain, an uphill slope 1210 is detected on the rear side of the robot 100 is assumed. In this case, as in 1202 in FIG. 12, the processor 140 may move the mass unit 122 to the end portion located on the rear surface side of the robot 100 from among the end portions on both sides of the guide element 21. Then, as in 1203 in FIG. 12, while the mass unit 122 has been moved to the rear surface side of the robot 100, the processor 140 may control the driver 130 such that the robot 100 goes backward and moves along the uphill slope.

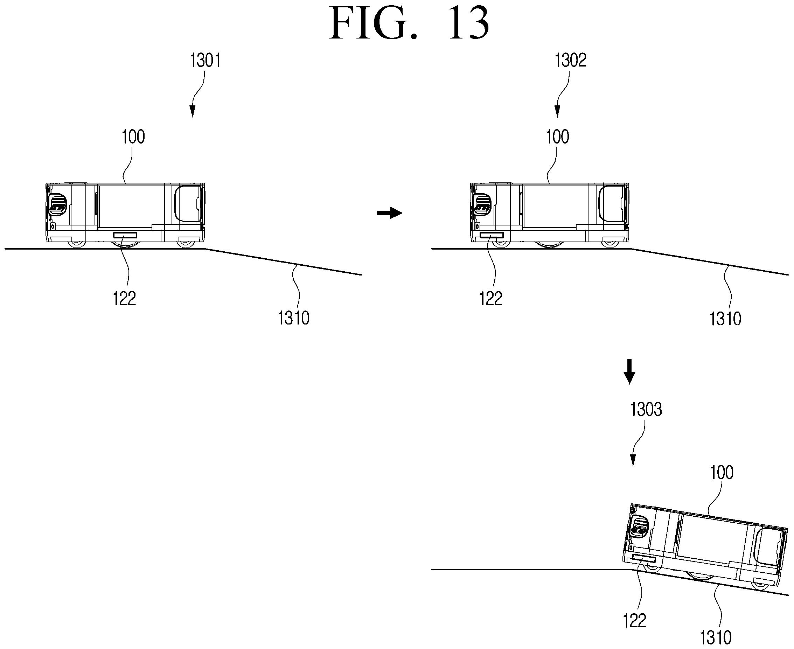

As still another example, as in 1301 in FIG. 13, a case where, while the robot 100 is moving to go backward on a plain, or the robot 100 is halted on a plain, a downhill slope 1310 is detected on the rear side of the robot 100 is assumed. In this case, as in 1302 in FIG. 13, the processor 140 may move the mass unit 122 to the end portion located on the front surface side of the robot 100 from among the end portions on both sides of the guide element 21. Then, as in 1303 in FIG. 13, while the mass unit 122 has been moved to the front surface side of the robot 100, the processor 140 may control the driver 130 such that the robot 100 goes backward and moves along the downhill slope.

As described above, in the case of an uphill slope, the center of gravity is moved to the direction in which the robot 100 moves, and in the case of a downhill slope, the center of gravity is moved to the opposite side to the direction in which the robot 100 moves, and thus the posture safety of the robot 100 when moving on a tilted surface may be increased.

If it is identified that the robot 100 will move across a tilted surface at the second time point based on the identified traveling situation, the processor 140 may move the mass unit 122 to the left side surface direction or the right side surface direction of the robot 100 based on the direction in which the tilted surface is tilted.

The feature of moving across the tilted surface does not mean that the robot 100 moves on the tilted surface according to the direction in which the tilted surface is tilted, but may mean that the robot 100 moves on the tilted surface in a direction perpendicular to the direction in which the tilted surface is tilted. Accordingly, in case the robot 100 moves across the tilted surface, the robot 100 may be tilted in the left direction or the right direction.

In this case, if it is identified that the robot 100 located on the tilted surface at the second time point will be tilted in the left direction, the processor 140 may move the mass unit 122 to a location which is distanced from the reference position by a fifth distance in the right direction, and if it is identified that the robot 100 located on the tilted surface at the second time point will be tilted in the right direction, the processor 140 may move the mass unit 122 to a location which is distanced from the reference position by the fifth distance in the left direction.

The fifth distance may be the distance between the center of the guide element 21 and an end portion of the guide element 22. That is, the processor 140 may move the mass unit 122 to the end portion of the guide element 22 located on the left side surface direction of the robot 100 or the end portion of the guide element 22 located on the right side surface direction of the robot 100.

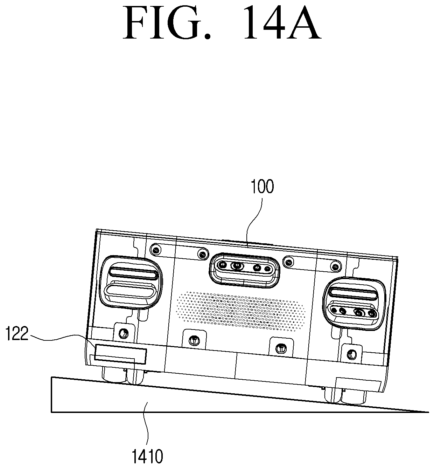

For example, a case where, while the robot 100 is moving to go backward on a plain, or the robot 100 is halted on a plain, a tilted surface is detected on the front side of the robot 100 is assumed. In case the robot 100 moves across the tilted surface while being tilted in the left direction, the processor 140 may move the mass unit 122 to the end portion located on the right side surface direction of the robot 100 from among the end portions on both sides of the guide element 22. Then, as in FIG. 14A, while the mass unit 122 has been moved to the right side surface direction of the robot 100, the processor 140 may control the driver 130 such that the robot 100 moves across the tilted surface.

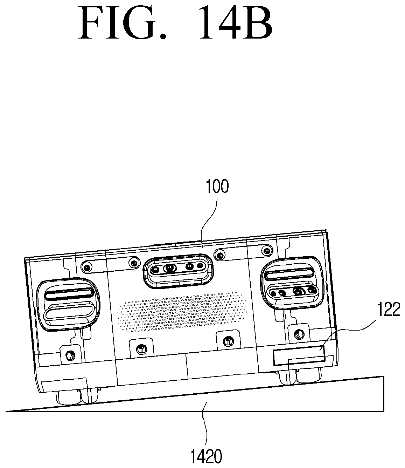

As another example, a case where, while the robot 100 is moving to go backward on a plain, or the robot 100 is halted on a plain, a tilted surface is detected on the front side of the robot 100 is assumed. In case the robot 100 moves across the tilted surface while being tilted in the right direction, the processor 140 may move the mass unit 122 to the end portion located on the left side surface direction of the robot 100 from among the end portions on both sides of the guide element 22. Then, as in FIG. 14B, while the mass unit 122 has been moved to the left side surface direction of the robot 100, the processor 140 may control the driver 130 such that the robot 100 moves across the tilted surface.

As described above, in case the robot 100 moves across a tilted surface, the center of gravity is moved to the opposite side to the direction in which the robot 100 is tilted, and thus the posture safety of the robot 100 when moving across a tilted surface may be increased.

As described above, according to the disclosure, traveling performance of a robot may be increased. Specifically, if wheels of a robot are easily lifted or a body of a robot easily staggers and the posture safety of the robot cannot be secured, the wheels cannot be driven fast even if the force of the motor driving the wheels is very strong, and accordingly, the traveling performance of the robot is reduced. Accordingly, in case acceleration safety, collision safety, braking performance, overpassing performance, etc. are increased by using a mass unit as in the disclosure, posture safety may be secured, and as a result, traveling performance of a robot may be increased.

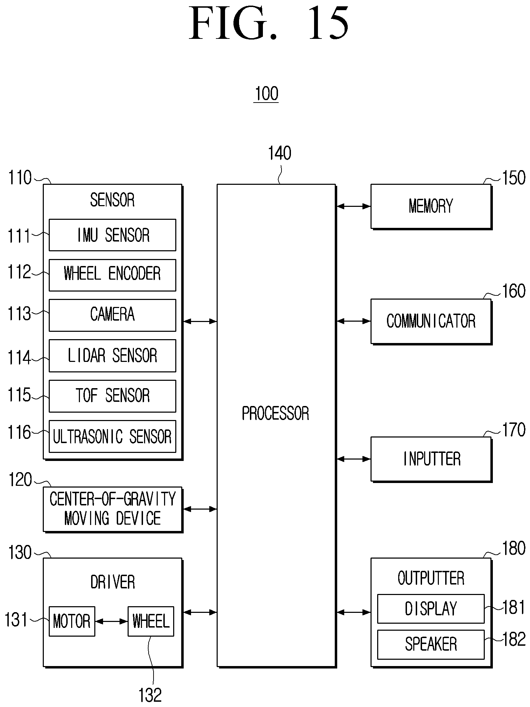

FIG. 15 is a block diagram illustrating a detailed configuration of a robot according to an embodiment of the disclosure.

Referring to FIG. 15, the robot 100 may include a sensor 110, a center of gravity moving device 120, a driver 130, a processor 140, memory 150, a communicator 160, an inputter 170, and an outputter 180. However, these components are merely exemplary ones, and it is obvious that in carrying out the disclosure, new components may be added in addition to these components or some components may be omitted. In explaining FIG. 15, explanation regarding portions that overlap with the portions already explained will be omitted or abridged.

The sensor 110 may include an IMU sensor 111, a wheel encoder 112, a camera 113, a LiDAR sensor 114, a ToF sensor 115, and an ultrasonic sensor 116.

The driver 130 may move the robot 100. The driver 130 may include a motor 131 and a wheel 132 connected to the motor 131. For example, the driver 130 may include a plurality of wheels and a plurality of motors for driving the plurality of wheels. The plurality of motors may control the plurality of wheels 132 according to control by the processor 140, and may thereby control various traveling operations such as moving, halting, control of the speed, or conversion of the direction, etc. of the robot 100.

In the memory 150, at least one instruction related to the robot 100 may be stored. Also, in the memory 150, an operating system (O/S) for driving the robot 100 may be stored. In addition, in the memory 150, various kinds of software programs or applications for the robot 100 to operate according to the various embodiments of the disclosure may be stored. Further, the memory 150 may include volatile memory such as a frame buffer, semiconductor memory such as flash memory, etc., or a magnetic storage medium such as a hard disk, etc.

Specifically, in the memory 150, various kinds of software modules for the robot 100 to operate according to the various embodiments of the disclosure may be stored, and the processor 140 may control the operations of the robot 100 by executing the various kinds of software modules stored in the memory 150. In the disclosure, the term memory 150 may be used as a meaning including the memory 150, ROM (not shown) and RAM (not shown) inside the processor 140, or a memory card (not shown) (e.g., a micro SD card, a memory stick) installed on the robot 100.

The communicator 160 is a component that performs communication with external devices. The processor 140 may transmit various kinds of data to an external device through the communicator 160, and receive various kinds of data from the external device.

For example, the communicator 160 may perform communication with various external devices through a wireless communication method such as Bluetooth (BT), Bluetooth Low Energy (BLE), Wireless Fidelity (WI-FI), Zigbee, etc., or an infrared (IR) communication method. The communicator 160 may not only be mounted on the processor 140, but it may also be included in the robot 100 as a separate component from the processor 140.

The inputter 170 includes circuitry. The inputter 170 may receive input of user instructions for setting or selecting various kinds of functions supported in the robot 100. For this, the inputter 170 may include a plurality of buttons. Also, the inputter 170 may be implemented as a touch screen that may simultaneously perform the function of the display 181.

In this case, the processor 140 may control operations of the robot 100 based on user instructions input through the inputter 170. For example, the processor 140 may control the robot 100 based on on/off instructions for the robot 100, on/off instructions for the functions of the robot 100, etc. input through the inputter 170 of the robot 100.

The outputter 180 may include a display 181 and a speaker 182.

The display 181 may display various kinds of information. For this, the display 181 may be implemented as a liquid crystal display (LCD), etc. The display 181 may also be implemented as a touch screen that may simultaneously perform the function of the inputter 170. Specifically, the processor 140 may display information related to the operations of the robot 100 on the display 181.

The speaker 182 may output audio. Specifically, the processor 140 may output various kinds of notification sounds or voice guide messages related to the operations of the robot 100 through the speaker 182.

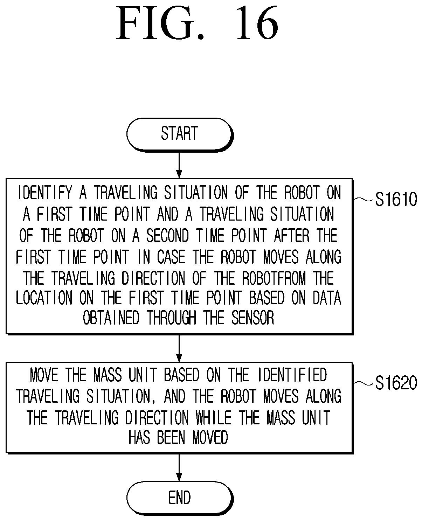

FIG. 16 is a flowchart illustrating a method of moving a center of gravity of a robot according to an embodiment of the disclosure.

A robot may include a sensor and a mass unit, and change the center of gravity by moving the mass unit.

First, a traveling situation of the robot at a first time point and a traveling situation of the robot at a second time point after the first time point in case the robot moves along the traveling direction of the robot from the location at the first time point is identified based on data obtained through the sensor in operation S1610.

Then, the mass unit is moved based on the identified traveling situation, and the robot moves along the traveling direction while the mass unit has been moved in the operation S1620.

Here, the traveling situation may be determined based on at least one of a posture of the robot, a traveling state of the robot, or a situation of the robot with respect to a traveling path.

Specifically, in operation S1610, at least one of the posture or the traveling state of the robot at the first time point may be identified based on the data obtained through the sensor at the first time point, and a traveling situation of the robot at the first time point including at least one of the identified posture or traveling state may be identified. In addition, in operation S 1610, at least one of the traveling state of the robot or the situation with respect to the traveling path at the second time point may be identified based on the data obtained through the sensor at the first time point, and a traveling situation of the robot at the second time point including at least one of the identified traveling state or situation with respect to the traveling path may be identified.

In operation S1620, if it is identified that the robot which is in a halt state on a plain at the first time point moves on the plain at the second time point on the basis of the identified traveling situation, the mass unit may be moved to a front surface direction or a rear surface direction of the robot on the basis of whether the robot goes forward or backward at the second time point.

Specifically, in operation S1620, if it is identified that the robot goes forward on the plain at the second time point, the mass unit may be moved to a location which is distanced from a reference position by a first distance in the front surface direction, and if it is identified that the robot goes backward on the plain at the second time point, the mass unit may be moved to a location which is distanced from the reference position by the first distance in the rear surface direction.

Also, in operation S1620, if it is identified that the robot moving on the plain at a first speed at the first time point moves on the plain at a second speed at the second time point on the basis of the identified traveling situation, the mass unit may be moved to a location which is distanced from the reference position by a second distance in the front surface direction or the rear surface direction of the robot on the basis of whether the robot goes forward or backward at the second time point and the second speed. The second distance may be determined to be proportionate to the second speed.

Specifically, in operation S1620, if it is identified that the robot goes forward on the plain at the second time point, the mass unit may be moved to the location which is distanced from the reference position by the second distance in the front surface direction, and if it identified that the robot goes backward on the plain at the second time point, the mass unit may be moved to the location which is distanced from the reference position by the second distance in the rear surface direction.

Also, in operation S 1620, if it is identified that a step exists on the traveling path where the robot moves at the second time point on the basis of the identified traveling situation, the mass unit may be moved in the front surface direction or the rear surface direction of the robot on the basis of whether the robot goes forward or backward on the plain at the second time point.

Specifically, in operation S 1620, if it is identified that the robot goes forward at the second time point, the mass unit may be moved to a location which is distanced from the reference position by a third distance in the rear surface direction, and if it is identified that the robot goes backward at the second time point, the mass unit may be moved to a location which is distanced from the reference position by the third distance in the front surface direction.

**In** this case, in operation S1620, the speed of the robot at the second time point may be determined based on at least one of the height of the step, the speed of the robot at the first time point, or the degree of congestion on the traveling path, and the robot may move along the traveling direction at the determined speed while the mass unit has been moved.

Specifically, in operation S1620, if it is identified that the height of the step is higher than a first height and shorter than or equal to a second height, and the speed of the robot at the first time point is slower than or equal to a predetermined speed, and the traveling path is not congested, the robot may move along the traveling direction at a speed faster than the predetermined speed. Also, in operation S1620, if it is identified that the height of the step is higher than the first height and shorter than or equal to the second height, and the speed of the robot at the first time point is slower than or equal to the predetermined speed, and the traveling path is congested, the driving force of a motor rotating a plurality of wheels of the robot on a time point when the robot crosses the step on the traveling path may be increased. In addition, in operation S 1620, if it is identified that the height of the step is higher than the first height and shorter than or equal to the second height, and the speed of the robot at the first time point is faster than the predetermined speed, the robot may move along the traveling direction at the first speed.

A specific method for the robot to move the mass unit according to a traveling situation was described above.

Meanwhile, according to an embodiment of the disclosure, the method according to the embodiments of the disclosure may be provided while being included in a computer program product. A computer program product refers to a product, and it may be traded between a seller and a buyer. A computer program product may be distributed in the form of a storage medium that is readable by machines (e.g., compact disc read only memory (CD-ROM)), or may be distributed directly between two user devices (e.g., smartphones), and distributed on-line (e.g., download or upload) through an application store (e.g., Play Store ^{™}). In the case of on-line distribution, at least a portion of a computer program product (e.g., a downloadable app) may be stored in a storage medium such as the server of the manufacturer, the server of the application store, and the memory of the relay server at least temporarily, or may be generated temporarily.

Also, each of the components (e.g., a module or a program) according to the aforementioned various embodiments of the disclosure may consist of a singular object or a plurality of objects. In addition, among the aforementioned corresponding sub components, some sub components may be omitted, or other sub components may be further included in the various embodiments. Alternatively or additionally, some components (e.g., a module or a program) may be integrated as an object, and perform the functions performed by each of the components before integration identically or in a similar manner.

Further, operations performed by a module, a program, or other components according to the various embodiments may be executed sequentially, in parallel, repetitively, or heuristically. Or, at least some of the operations may be executed in a different order or omitted, or other operations may be added.

The term "a part" or "a module" used in the disclosure may include a unit consisting of hardware, software, or firmware, and may be interchangeably used with, for example, terms such as a logic, a logical block, a component, or circuitry. In addition, "a part" or "a module" may be a component constituted as an integrated body or a minimum unit or a part thereof performing one or more functions. For example, a module may be constituted as an application-specific integrated circuit (ASIC).

A non-transitory computer-readable medium storing a program that sequentially performs the control method according to the disclosure may be provided. A non-transitory computer-readable medium refers to a medium that stores data semi-permanently, and is readable by machines, but not a medium that stores data for a short moment such as a register, a cache, and memory. Specifically, the aforementioned various applications or programs may be provided while being stored in a non-transitory computer-readable medium such as a CD, a DVD, a hard disc, a blue-ray disc, a universal serial bus (USB), a memory card, read-only memory (ROM), and the like.

Also, the embodiments of the disclosure may be implemented as software including instructions stored in machine-readable storage media, which may be read by machines (e.g., computers). The machines refer to devices that call instructions stored in a storage medium, and may operate according to the called instructions, and the devices may include an electronic device according to the aforementioned embodiments (e.g., the robot 100).

In case an instruction is executed by a processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A robot comprising:
a sensor;
a driver;
a center of gravity moving device configured to change the center of gravity of the robot by moving a mass unit; and
at least one processor configured to:
identify a traveling situation of the robot at a first time point and a traveling situation of the robot at a second time point after the first time point in case the robot moves along the traveling direction of the robot from the location at the first time point based on data obtained through the sensor, and
control the center of gravity moving device such that the mass unit is moved based on the identified traveling situation, and control the driver such that the robot moves along the traveling direction while the mass unit has been moved,
wherein the traveling situation is determined based on at least one of a posture of the robot, a traveling state of the robot, or a situation of the robot with respect to a traveling path.

2. The robot of claim 1,
wherein the at least one processor is configured to:
identify at least one of the posture or the traveling state of the robot at the first time point based on the data obtained through the sensor at the first time point, and identify a traveling situation of the robot at the first time point including at least one of the identified posture or traveling state, and
identify at least one of the traveling state of the robot or the situation with respect to the traveling path at the second time point based on the data obtained through the sensor at the first time point, and identify a traveling situation of the robot at the second time point including at least one of the identified traveling state or situation with respect to the traveling path.

3. The robot of claim 1,
wherein the at least one processor is configured to:
based on identifying that the robot which is in a halt state on a plain at the first time point moves on the plain at the second time point on the basis of the identified traveling situation, move the mass unit to a front surface direction or a rear surface direction of the robot on the basis of whether the robot goes forward or backward at the second time point.

4. The robot of claim 3,
wherein the at least one processor is configured to:
based on identifying that the robot goes forward on the plain at the second time point, move the mass unit to a location which is distanced from a reference position by a first distance in the front surface direction, and
based on identifying that the robot goes backward on the plain at the second time point, move the mass unit to a location which is distanced from the reference position by the first distance in the rear surface direction.

5. The robot of claim 1,
wherein the at least one processor is configured to:
based on identifying that the robot moving on the plain at a first speed at the first time point moves on the plain at a second speed at the second time point on the basis of the identified traveling situation, move the mass unit to a location which is distanced from the reference position by a second distance in the front surface direction or the rear surface direction of the robot on the basis of whether the robot goes forward or backward at the second time point and the second speed, and
the second distance is determined to be proportionate to the second speed.

6. The robot of claim 5,
wherein the at least one processor is configured to:
based on identifying that the robot goes forward on the plain at the second time point, move the mass unit to the location which is distanced from the reference position by the second distance in the front surface direction, and
based on identifying that the robot goes backward on the plain at the second time point, move the mass unit to the location which is distanced from the reference position by the second distance in the rear surface direction.

7. The robot of claim 1,
wherein the at least one processor is configured to:
based on identifying that a step exists on the traveling path wherein the robot moves at the second time point on the basis of the identified traveling situation, move the mass unit in the front surface direction or the rear surface direction of the robot on the basis of whether the robot goes forward or backward on the plain at the second time point.

8. The robot of claim 7,
wherein the at least one processor is configured to:
based on identifying that the robot goes forward at the second time point, move the mass unit to a location which is distanced from the reference position by a third distance in the rear surface direction, and
based on identifying that the robot goes backward at the second time point, move the mass unit to a location which is distanced from the reference position by the third distance in the front surface direction.

9. The robot of claim 7,
wherein the at least one processor is configured to:
determine the speed of the robot at the second time point based on at least one of the height of the step, the speed of the robot at the first time point, or the degree of congestion on the traveling path, and
control the driver such that the robot moves along the traveling direction at the determined speed while the mass unit has been moved.

10. The robot of claim 9,
wherein the at least one processor is configured to:
based on identifying that the height of the step is higher than a first height and shorter than or equal to a second height, and the speed of the robot at the first time point is slower than or equal to a predetermined speed, and the traveling path is not congested, control the driver such that the robot moves along the traveling direction at a speed faster than the predetermined speed,
based on identifying that the height of the step is higher than the first height and shorter than or equal to the second height, and the speed of the robot at the first time point is slower than or equal to the predetermined speed, and the traveling path is congested, control the driver to increase the driving force of a motor rotating a plurality of wheels of the robot on a time point when the robot passes over the step on the traveling path, and
based on identifying that the height of the step is higher than the first height and shorter than or equal to the second height, and the speed of the robot at the first time point is faster than the predetermined speed, control the driver such that the robot moves along the traveling direction at the first speed.

11. A center of gravity moving method for a robot which comprises a sensor and a mass unit, and changes the center of gravity by moving the mass unit, the method comprising:
identifying a traveling situation of the robot on a first time point and a traveling situation of the robot at a second time point after the first time point in case the robot moves along the traveling direction of the robot from the location at the first time point based on data obtained through the sensor; and
moving the mass unit based on the identified traveling situation, and moving along the traveling direction while the mass unit has been moved,
wherein the traveling situation is determined based on at least one of a posture of the robot, a traveling state of the robot, or a situation of the robot with respect to a traveling path.

12. The center of gravity moving method of claim 11,
wherein the identifying comprises:
identifying at least one of the posture or the traveling state of the robot at the first time point based on the data obtained through the sensor at the first time point, and identifying a traveling situation of the robot at the first time point including at least one of the identified posture or traveling state; and
identifying at least one of the traveling state of the robot or the situation with respect to the traveling path at the second time point based on the data obtained through the sensor at the first time point, and identifying a traveling situation of the robot at the second time point including at least one of the identified traveling state or situation with respect to the traveling path.

13. The center of gravity moving method of claim 11,
wherein the moving comprises:
based on identifying that the robot which is in a halt state on a plain at the first time point moves on the plain at the second time point on the basis of the identified traveling situation, move the mass unit to a front surface direction or a rear surface direction of the robot on the basis of whether the robot goes forward or backward at the second time point.

14. The center of gravity moving method of claim 13,
wherein the moving comprises:
based on identifying that the robot goes forward on the plain at the second time point, moving the mass unit to a location which is distanced from a reference position by a first distance in the front surface direction; and
based on identifying that the robot goes backward on the plain at the second time point, moving the mass unit to a location which is distanced from the reference position by the first distance in the rear surface direction.

15. The center of gravity moving method of claim 11,
wherein the moving comprises:
based on identifying that the robot moving on the plain at a first speed at the first time point moves on the plain at a second speed at the second time point on the basis of the identified traveling situation, moving the mass unit to a location which is distanced from the reference position by a second distance in the front surface direction or the rear surface direction of the robot on the basis of whether the robot goes forward or backward at the second time point and the second speed, and
the second distance is determined to be proportionate to the second speed.
